(19) Europäisches Patentamt

European Patent Office

Office européen des brevets

(11) Veröffentlichungsnummer: **0 024 741**
**B1**

# (12) EUROPÄISCHE PATENTSCHRIFT

(45) Veröffentlichungstag der Patentschrift:
**30.11.83**

(21) Anmeldenummer: **80105204.4**

(22) Anmeldetag: **02.09.80**

(51) Int. Cl.³: **B 23 B 51/04**, B 23 B 41/08

(54) **Ventilanbohrarmatur.**

(30) Priorität: **03.09.79 DE 2935565**

(43) Veröffentlichungstag der Anmeldung:
**11.03.81 Patentblatt 81/10**

(45) Bekanntmachung des Hinweises auf die Patenterteilung:
**30.11.83 Patentblatt 83/48**

(84) Benannte Vertragsstaaten:
**AT BE CH FR IT LI LU NL SE**

(56) Entgegenhaltungen:
**DE - A - 2 026 855**
**DE - A - 2 035 667**
**DE - A - 2 505 098**
**DE - C - 23 565**
**DE - C - 106 808**
**DE - C - 920 701**
**US - A - 2 053 702**
**US - A - 3 765 789**

(73) Patentinhaber: **BOPP & REUTHER GMBH,
Carl-Reuther-Strasse 1, D-6800 Mannheim 31 (DE)**

(72) Erfinder: **Siebald, Hansjürgen, Brunnengasse 19,
D-6940 Weinheim/Hohensachsen (DE)**
Erfinder: **Stuff, Paul-Walter, Meisenstrasse 18,
D-5952 Attendorn (DE)**

BUNDESDRUCKEREI BERLIN

Ventilanbohrarmatur

Die Erfindung bezieht sich auf eine Ventilanbohrarmatur, insbesondere für Kunststoffrohrleitungen, bei der der untere Teil der Ventilspindel einen Ventildichtkörper aufweist, der bei Spindelbetätigung gegen einen zwischen Anbohrung und Abgangsstutzen angeordneten Ventilsitz arbeitet, wobei die Ventilspindel im Anschluß an den Ventildichtkörper einen metallischen Hohlfräser für den Anbohrvorgang trägt, dessen zylindrisches Fräsrohr mehrere gleichmäßig auf dem Umfang verteilte, in Drehrichtung leicht zur Fräslängsachse geneigte Zahnleisten mit stirnseitigen Schneidkanten aufweist, und zwischen den Zahnleisten je eine Spannut vorgesehen ist, und der becherartige Fräsrohrinnenraum als Aufnahmekammer für die Bohrspäne sowie für die ausgeschnittene Rohrscheibe dient, die von einem Innengewinde der Fräsrohr-Zahnleisten gehalten wird.

Bei derartigen bekannten Ventilanbohrarmaturen für Kunststoffrohrleitungen (vgl. DE-A-2 505 098) hat man bisher die zwischen den Zahnleisten liegenden Spannuten als offene Schlitze ausgebildet, die das Fräsrohr in diesem Bereich in Umfangsrichtung gesehen in einzelne freistehende Zahnleisten zerlegen. Über diese Spannuten sollen die Kunststoffspäne während des Anbohrvorganges in den Fräsrohrinnenraum abgeführt werden.

Beim Anbohren von Kunststoffrohren mit Hilfe dieser bekannten Ventilanbohrvorrichtung treten jedoch Schwierigkeiten im Hinblick auf das Abführen der Kunststoffspäne auf. Die Schneidkanten der Zahnleisten schneiden eine Ringnut in die Rohrwand, deren Breite der Dicke der Zahnleisten entspricht, so daß die Späne in diesem schmalen Ringkanal über die Spannuten nach oben abfließen müssen. Je tiefer das Fräsrohr hierbei in die Rohrwandung und damit die auszuschneidende Rohrscheibe in den Fräsrohrinnenraum eingedrungen ist, um so länger werden diese schmalen Spanabflußkanäle, bevor die Späne oberhalb der Rohrscheibe aus den Spannuten nach innen in den freien Fräsrohrinnenraum fließen können.

Insbesondere beim Anbohren von dickwandigen Kunststoffrohren stauen sich die Späne in diesen engen Spanabflußnuten dann, wenn die Rohrscheibe bereits zum größten Teil ausgeschnitten und die schmalen Abflußkanäle der Spannuten relativ lang geworden sind, wobei diese Kunststoffspäne dann fest ineinandergepreßt werden können und dadurch den weiteren Spanabfluß blockieren. Durch die hierbei auftretende hohe Reibungswärme in Verbindung mit der Erwärmung des Kunststoffes beim Zerspanen und beim Einschneiden der Rohrscheibe in das Innengewinde des Fräsrohres können diese Späne sogar miteinander verschweißen. Durch dieses Verpressen oder Verschweißen der Späne treten beim weiteren Anbohrvorgang so hohe Kräfte auf, daß einzelne oder sogar alle Zahnleisten des in der Regel aus Messing bestehenden Fräsrohres abgebogen werden oder sogar reißen. Beim Stauen der Späne in den Spannuten können sich auch Spanteilchen zwischen dem Innengewinde der Zahnleisten und dem Außenrand der Rohrscheibe einklemmen, so daß die Reibung und Erwärmung des Kunststoffes noch weiter erhöht wird und der in das Innengewinde des Fräsrohres eingedrehte Rohrscheibenteil als Keilpfropfen wirkt, der die Zahnleisten konisch nach außen biegt, so daß sich der Hohlfräser nicht mehr aus der angebohrten Rohrwand herausziehen läßt.

Auch ist bei den bekannten Ventilanbohrvorrichtungen das für den Anbohrvorgang erforderliche Antriebsdrehmoment durch die hohe Reibung des Kunststoffes im Innengewinde des Fräsrohres sehr hoch und wird beim Klemmen der Kunststoffspäne in den Spannuten oder im Innengewinde unzulässig gesteigert. Außerdem hat sich gezeigt, daß Späne aus den offenen Spannutenschlitzen in den Gehäuseinnenraum der Anbohrarmatur dringen können und dann als schädliche Fremdkörper von der Strömung mitgerissen werden oder sich am Ventilsitz absetzen und die Abdichtung der Ventilanbohrvorrichtung gefährden.

Aufgabe der Erfindung ist es, das Fräsrohr der Ventilanbohrarmatur so auszubilden, daß keine Verformungen oder Beschädigungen an den Zahnleisten auftreten können und eine einwandfreie Abführung der Späne in den Fräsrohrinnenraum sowie ein niedriges Antriebsdrehmoment gewährleistet sind.

Die Lösung dieser Aufgabe wird in den kennzeichnenden Merkmalen des Patentanspruchs 1 gesehen.

Durch eine solche Verbindung der dickwandigen Zahnleisten mit den im Bereich der Spannuten vorgesehenen, gleichbleibend dünnwandigen äußeren Mantelabschnitten zu einem geschlossenen zylindrischen Außenmantel wird das Fräsrohr ganz erheblich versteift. Trotz der Dünnwandigkeit der äußeren Mantelabschnitte erhalten die Zahnleisten durch ihre Einbeziehung in einen geschlossenen Rohrquerschnitt eine biege- und knickfeste Aussteifung, wobei die Zahnleisten durch ihre Dicke als Versteifungsrippen für den Rohrmantel des Fräsrohres wirken. Ein Abbiegen oder Reißen der Zahnleisten ist somit nicht mehr zu befürchten, auch wenn Späne sich in den Spannuten oder im Innengewinde des Fräsrohres einklemmen sollten.

Die außen an den Spannuten vorgesehenen Mantelabschnitte verringern die lichte Höhe der Spannuten nur unwesentlich, da sie sich mit gleichbleibender Dünnwandigkeit über den Mantelumfang der Spannuten erstrecken, und dadurch, daß die Spannuten in Umfangsrichtung gesehen breiter als die Zahnleisten ausgebildet sind, ergibt sich trotz der Mantelabschnitte noch ein ausreichend großer freier Querschnitt in den Spannuten für eine einwandfreie Abführung der Späne. Die breiten Spannuten bilden zusammen mit den als Gleitwände wirkenden Außenmantelabschnitten gute Führungsrinnen für die Kunststoffspäne, die dadurch, daß die Spannuten nahezu bis zum Boden des becherartigen Fräsrohrinnenraumes reichen, in Nutlängsrichtung offen bleiben und einen weitgehend geradlinigen Späneabfluß ohne Stauung bewirken. Die Fließspäne hinterwandern während des Anbohrvorgangs in den Spannuten auch eine dickwandige und bereits tief in das Fräsrohr eingreifende Rohrscheibe und steigen innerhalb des Nutquerschnitts noch weiter frei auf, bevor sie zum Fräsrohrinnenraum abfließen.

Dadurch, daß für die Halterung der Rohrscheibe nur wenige Innengewindegänge im Fräsrohr vorgesehen und diese Gewindegänge zum Fräsrohrinnenraum hin hinterschnitten sind, klemmen sich keine Späne mehr im Gewinde fest und das Fräsrohr läßt sich leichter in die Rohrscheibe eindrehen, wodurch die Reibung wesentlich herabgesetzt wird und die am Fräsrohr angreifenden Kräfte weiter vermindert werden. In Verbindung mit der durch die besondere Spannutenausbildung erzielten besseren Späneabführung wird dadurch auch die Reibungserwärmung des Kunststoffes wesentlich verringert, so daß die Kunststoffspäne jetzt nicht mehr verschweißen können. Auch das für den Anbohrvorgang erforderliche Antriebsdrehmoment ist dadurch wesentlich geringer und wegen des geschlossenen Fräsrohraußenmantels können die Späne nicht mehr nach außen in das Gehäuse der Anbohrarmatur treten und den Ventilsitz oder das Leitungsnetz beschädigen.

Eine noch weitere Herabsetzung der Reibung und des Antriebsdrehmoments läßt sich dadurch erzielen, daß gemäß dem Merkmal des Patentanspruchs 2 nur wenige über den Umfang des Fräsrohres verteilte Zahnleisten mit einem Innengewinde versehen sind und die übrigen dazwischenliegenden Zahnleisten kein Innengewinde tragen und bis zur Schneidkante hinterschnitten sind.

Die Erfindung wird anhand eines Ausführungsbeispiels in der Zeichnung näher erläutert, und zwar zeigt

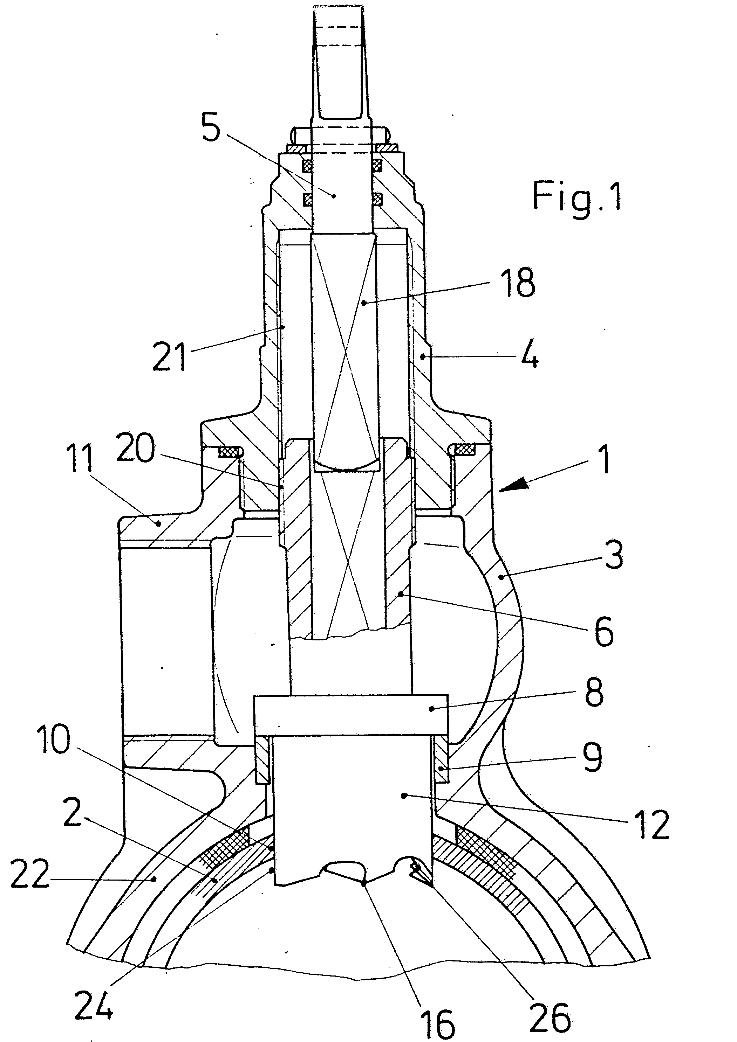

Fig. 1 eine Ventilanbohrarmatur im Längsschnitt mit dem erfindungsgemäßen Fräsrohr,

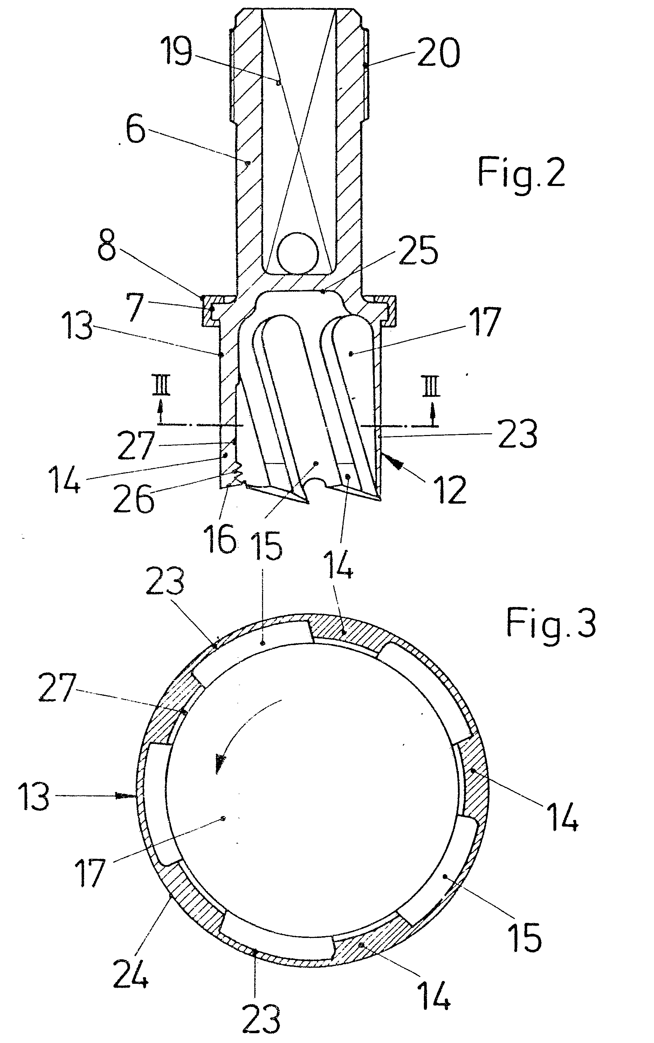

Fig. 2 den in der Fig. 1 gezeigten unteren Teil der Ventilspindel mit Fräsrohr im Längsschnitt und

Fig. 3 einen Querschnitt des Fräsrohres nach Linie III-III der Fig. 2 in vergrößerter Darstellung.

Wie die Zeichnung zeigt, ist die als Ventilanbohrbrücke ausgebildete Anbohrarmatur 1 in üblicher Weise auf das anzubohrende Kunststoffrohr 2 aufgesetzt. Das Gehäuse 3 der Anbohrarmatur 1 ist nach oben durch einen eingeschraubten Gehäusekopf 4 abgeschlossen, in dem der obere Teil 5 der zweiteiligen Ventilspindel drehbar gelagert ist. Der untere Teil 6 der Ventilspindel besitzt einen Ventildichtkörper 7 mit Dichtring 8, der bis zur Anlage an die Sitzbüchse 9 des Gehäuses 3 niedergeschraubt werden kann und dadurch die Anbohröffnung 10 gegen den Abgangsstutzen 11 des Gehäuses 3 abdichtet.

Unterhalb des Ventildichtkörpers 7 trägt der aus Messing bestehende untere Teil 6 der Ventilspindel einen Hohlfräser 12 für den Anbohrvorgang, der aus dem beim Pressen oder Gießen angeformten zylindrischen Fräsrohr 13 mit den in Drehrichtung zur Fräslängsachse leicht geneigten Zahnleisten 14 und den dazwischenliegenden Spannuten 15 besteht. Die Stirnseiten der Zahnleisten bilden die Schneidkanten 16 des Hohlfräsers und der becherartige Innenraum 17 des Fräsrohres 13 dient als Aufnahmekammer für die Kunststoffspäne.

Das als Vierkant ausgebildete untere Ende 18 des oberen Ventilspindelteils 5 greift in den Innenvierkant 19 des unteren Ventilspindelteils 6 ein, wodurch die Drehbewegung vom oberen Teil 5 auf den unteren Teil 6 der Ventilspindel übertragen wird. Bei dieser Drehbewegung wandert der Gewindeansatz 20 des unteren Ventilspindelteils 6 im Innengewinde 21 des Gehäusekopfes 4 auf oder ab, wodurch sowohl das Ausschneiden der Rohrscheibe aus der Wandung des Kunststoffrohres 2 als auch die dichte Anlage des Dichtkörpers 7, 8 gegen den Ventilsitz 9 nach Tieferdrehen der Ventilspindel bewirkt wird. Das Gehäuse 3 trägt nach unten hin ein Sattelstück 22, das sich um die obere Hälfte des Kunststoffrohres 2 legt und schellenartig mit einem die untere Hälfte des Kunststoffrohres umschließenden Haltestück verschraubt ist.

Gemäß der Erfindung sind die Spannuten 15 des Fräsrohres 13 nach außen durch gleichbleibend dünnwandige Mantelabschnitte 23 geschlossen, die mit den dickwandigen Zahnleisten 14 einen geschlossenen zylindrischen Außenmantel 24 am Fräsrohr 13 bilden. Im Bereich der Schneidkanten 16 sind die Mantelabschnitte 23 hinterschnitten. Die Spannuten 15 reichen nahezu bis zum Boden 25 des Fräsrohrinnenraumes 17 und sind in Umfangsrichtung gesehen breiter als die Zahnleisten 14. Für die Halterung der ausgeschnittenen Rohrscheibe sind die Zahnleisten 14 des Fräsrohres 13 mit einem Innengewinde 26 versehen, das jedoch nur aus wenigen von den Schneidkanten 16 ausgehenden Gewindegängen besteht. Zum Fräsrohrinnenraum 17 hin sind diese Gewindegänge 26 der Zahnleisten 14 durch eine Eindrehung 27 hinterschnitten.

**Patentansprüche**

1. Ventilanbohrarmatur (1), insbesondere für Kunststoffrohrleitungen (2), bei der der untere Teil (6) der Ventilspindel (5, 6) einen Ventildichtkörper (7) aufweist, der bei Spindelbetätigung gegen einen zwischen Anbohrung (10) und Abgangsstutzen (11) angeordneten Ventilsitz (9) arbeitet, wobei die Ventilspindel (5, 6) im Anschluß an den Ventildichtkörper (7) einen metallischen Hohlfräser (12) für den Anbohrvorgang trägt, dessen zylindrisches Fräsrohr (13) mehrere gleichmäßig auf dem Umfang verteilte, in Drehrichtung leicht zur Fräserlängsachse geneigte Zahnleisten (14) mit stirnseitigen Schneidkanten (16) aufweist, und zwischen den Zahnleisten (14) je eine Spannut (15) vorgesehen ist, und der becherartige Fräsrohrinnenraum (17) als Aufnahmekammer für die Bohrspäne sowie für die ausgeschnittene Rohrscheibe dient, die von einem Innengewinde (26) der Fräsrohr-Zahnleisten (14) gehalten wird, dadurch gekennzeichnet, daß die Spannuten (15) des Fräsrohres (13) bis auf den Bereich der Schneidkanten (16) durch gleichbleibend dünnwandige, mit den dickwandigen Zahnleisten (14) einteilige und einen geschlossenen zylindrischen Außenmantel (24) am Fräsrohr (13) bildende Mantelabschnitte (23) nach außen abgedeckt sind, und die Spannuten nahezu bis zum Boden (25) des Fräsrohrinnenraums (17) reichen und in Umfangsrichtung gesehen breiter als die Zahnleisten (14) ausgebildet sind, wobei das Innengewinde (26) der Fräsrohr-Zahnleisten nur aus wenigen von den Schneidkanten (16) ausgehenden Gewindegängen besteht, die zum Fräsrohrinnenraum (17) hin hinterschnitten sind.

2. Ventilanbohrarmatur nach Anspruch 1, dadurch gekennzeichnet, daß nur wenige über den Umfang des Fräsrohres (13) verteilte Zahnleisten (14) mit einem Innengewinde (26) versehen sind und die übrigen dazwischenliegenden Zahnleisten kein Innengewinde tragen und bis zur Schneidkante (16) hinterschnitten sind.

**Claims**

1. Valve drill fitting (1) in particular for plastics material pipes (2), in which the lower portion (6) of the valve stem (5, 6) has a valve sealing member (7) which, during actuation of the stem, works against a valve seat (9) situated between the hole drilled (10) and the outflow stub pipe (11), the valve spindle (5,6) in continuation of the valve sealing member (7) carrying a hollow metal cutter (2) for the drilling operation, the cylindrical cutter tube (13) of which has several tooth fillets (14) evenly distributed over the periphery, inclined a little in the direction of rotation with respect to the longitudinal axis of the cutter, and comprising end-face cutting edges (16), and a chip groove (15) situated between to tooth fillets (14) in each case, and the cup-like internal space (17) of the cutter tube acts as a reception chamber for the drilling cuttings as well as for the pipe disc cut out which is held fast by an internal screw-thread (26) of the cutter tube tooth fillets (14), characterised in that the chip grooves (15) of the cutter tube (13) are outwardly covered except for the area of the cutting edges (16) by jacket sections (23) of constant thin gauge, which are in unit with the thick-walled tooth fillets (14) and form a closed cylindrical outer jacket (24) on the cutter tube (13), and the chip grooves extend almost to the base (25) of the cutter tube inner volume (17) and are formed with greater width than the tooth fillets (14) as seen in the peripheral direction, the inner screw-thread (26) of the cutter tube tooth fillets comprising but few screw threads starting from the cutting edges (16), which are undercut with respect to the cutter tube inner volume (17).

2. Valve drill fitting according to claim 1, characterised in that only a few of the tooth fillets (14) spread over the periphery of the cutter tube (13) are provided with an internal screw-thread (26) and the other interposed tooth fillets do not carry an inner screw-thread and are undercut up to the cutting edge (16).

**Revendications**

1. Dispositif de perçage à valve (1), en particulier pour des tuyaux en matière plastique (2) dans lequel la partie inférieure (6) de la broche (5, 6) de la valve présente un organe d'étanchéité (7) qui, lorsqu'on actionne la broche, s'applique contre un siège (9) disposé entre le perçage (10) et le raccord de sortie (11), la broche (5, 6) portant, dans le prolongement de l'organe d'étanchéité (7), une fraise métallique creuse (12) pour l'opération de perçage, fraise dont le tube de fraisage cylindrique (13) présente plusieurs barrettes dentées (14) uniformément distribuées sur sa circonférence et légèrement inclinées par rapport à l'ace longitudinal de la fraise dans le sens de rotation, tout en présentant des tranchants frontaux (16), tandis que, dans chacun des intervalles entre les barrettes dentées (14), est prévue une rainure (15) d'évacuation des copeaux, et que l'espace intérieur en forme de godet (17) du tube de la fraise sert de chambre de réception pour les copeaux de perçage ainsi que pour le disque découpé dans le tuyau, lequel est retenu par un taraudage intérieur (26) des barrettes dentées (14) du tube de la fraise, caractérisé en ce que les rainures d'évacuation (15) des copeaux du tube (13) de la fraise sont couvertes extérieurement, jusqu'à la région des tranchants (16), par des sections d'enveloppe relativement minces (23), d'épaisseur uniforme, venues de matière avec les barrettes dentées épaisses (14), et formant ainsi une enveloppe extérieure cylindrique fermée (24) autour du tube (13) de la fraise, et en ce que les rainures d'évacuation des copeaux s'étendent presque jusqu'au fond (25) de l'espace intérieur (17) du tube de la fraise et ont, vues dans le sens circonférentiel, une plus grande largeur que les barrettes dentées (14), le raraudage intérieur (26) des barrettes dentées du tube de la fraise ne comprenant que quelques spires qui partent destranchants (16), et sont dégagées à l'arrière en direction de l'espace intérieur (17) du tube de la fraise.

2. Dispositif de perçage à valve selon la revendication 1, caractérisé en ce que, seulement quelques unes des barrettes dentées (14) réparties sur le pourtour du tube (13) de la fraise, sont pourvues d'un taraudage intérieur (26), les barrettes dentées intermédiaires restantes ne portant pas de taraudage intérieur et étant taillées jusqu'au tranchant (16).

Fig.1

Fig.2

Fig.3